Europäisches Patentamt

European Patent Office

Office européen des brevets

(19)

(11) Veröffentlichungsnummer: **0 275 010 B1**

(12) **EUROPÄISCHE PATENTSCHRIFT**

(45) Veröffentlichungstag der Patentschrift: **21.11.91**

(21) Anmeldenummer: **88100030.1**

(22) Anmeldetag: **05.01.88**

(51) Int. Cl.⁵: **C08G 18/79**, C08G 18/66,
C08G 18/48, C08G 18/22,
C08G 18/73, C08G 18/75

(54) **Verfahren zur Herstellung von Polyurethan-Formteilen.**

(30) Priorität: **14.01.87 DE 3700918**
**23.07.87 DE 3724377**

(43) Veröffentlichungstag der Anmeldung:
**20.07.88 Patentblatt 88/29**

(45) Bekanntmachung des Hinweises auf die
Patenterteilung:
**21.11.91 Patentblatt 91/47**

(84) Benannte Vertragsstaaten:
**BE DE FR GB IT**

(56) Entgegenhaltungen:
**EP-A- 0 210 566**
**DE-A- 2 900 031**
**DE-A- 3 033 860**

(73) Patentinhaber: **BAYER AG**

**W-5090 Leverkusen 1 Bayerwerk(DE)**

(72) Erfinder: **Pilger, Friedhelm, Dr.**
**Schillingstrasse 37-39**
**W-5000 Köln 1(DE)**
Erfinder: **Knipp, Ulrich, Dr.**
**Haberlandstrasse 3**
**W-5060 Bergisch-Gladbach(DE)**
Erfinder: **Halpaap, Reinhard, Dr.**
**Kleinfeldchensweg 37b**
**W-5000 Köln 91(DE)**

**Beschreibung**

Die Erfindung betrifft ein neues Verfahren zur Herstellung von lichtbeständigen, gegebenenfalls geschäumten, elastischen Polyurethan-Formteilen durch Umsetzung in geschlossenen Formen von organischen Polyisocyanaten mit Verbindungen mit mindestens zwei gegenüber Isocyantgruppen reaktionsfähigen Gruppen unter Mitverwendung von Katalysatoren und gegebenenfalls den üblichen Hilfs- und Zusatzmitteln, wobei als Polyisocyanate bestimmte Gemische von ausgewählten Polyisocyanaten mit aliphatisch bzw. cycloaliphatisch gebundenen Isocyanatgruppen zum Einsatz gelangen.

Es ist bereits bekannt, unter Verwendung von aliphatischen und/oder cycloaliphatischen Polyisocyanaten lichtbeständige, elastische Polyurethanschaumstoffe herzustellen. Da jedoch die Reaktivität von aliphatischen bzw. cycloaliphatischen Polyisocyanaten wesentlich geringer ist als die der bei der Herstellung von Polyurethanschaumstoffen üblicherweise eingesetzten aromatischen Polyisocyanate, sah man sich bislang dazu gezwungen sehr spezielle Katalysatorkombinationen für die Herstellung derartiger Schaumstoffe einzusetzen.

So empfiehlt beispielsweise die DE-OS 3 008 811, zur Katalyse der Polyurethanbildungsreaktion Verbindungen, die primäre oder sekundäre Aminogruppen enthalten, in Kombination mit einer organischen Wismutverbindung zu verwenden.

In der DE-OS 2 447 067 bzw. der DE-OS 2 710 901 werden spezielle Kombinationen von bestimmten Aminen, Amidinen oder Guanidinen mit Erdalkalisalzen bzw. Kombinationen von Verbindungen mit primären oder sekundären Aminogruppen mit Bleiverbindungen empfohlen.

Die DE-OS 2 825 569 empfiehlt Kombinationen von Alkaliverbindungen und/oder von Hexahydrotriazinderivaten mit organischen Zinn-, Zink- und/oder Eisen(II)verbindungen.

Die DE-OS 2 832 253 empfiehlt schließlich Alkali- und Erdalkalihydroxide in Kombination mit organischen Zinn-, Blei- und Eisenverbindungen.

Mit dem nachstehend näher beschriebenen erfindungsgemäßen Verfahren wird nun ein neuer Weg zu lichtbeständigen, elastischen Polyurethan-Formteilen gewiesen, bei welchem Polyisocyanate mit Reaktionspartnern mit gegenüber Isocyanatgruppen reaktionsfähigen Gruppen und Hilfs- und Zusatzstoffen zu hochwertigen Endprodukten umgesetzt werden. Das nachstehend näher beschriebene erfindungsgemäße Verfahren ist durch die Verwendung von Abmischungen von IPDI mit Isocyanuratgruppen aufweisenden Polyisocyanaten, insbesondere solchen auf Basis von 1,6-Diisocyanatohexan gekennzeichnet und unterscheidet sich diesbezüglich vom Verfahren der eigenen älteren deutschen Patentanmeldung P 3 527 863.3. Das nachstehend näher beschriebene erfindungsgemäße Verfahren führt insbesondere zu Formkörpern eines angenehmen, trockenen Griffs.

Gegenstand der Erfindung ist ein Verfahren zur Herstellung von lichtbeständigen, gegebenenfalls geschäumten, elastischen Polyurethan-Formteilen durch Umsetzung von

a) organischen Polyisocyanaten

mit

b) im Sinne der Isocyanat-Additionsreaktion mindestens difunktionellen organischen Verbindungen mit gegenüber Isocyanatgruppen reaktionsfähigen Wasserstoffatomen

in Gegenwart von

c) die Isocyanat-Additionsreaktion beschleunigenden Katalysatoren

und gegebenenfalls unter Mitverwendung von

d) weiteren, aus der Polyurethanchemie an sich bekannten Hilfs- und Zusatzstoffen,

wobei die Reaktionspartner unter Einhaltung einer Isocyanat-Kennzahl von 70 bis 130 in geschlossenen Formen zur Umsetzung gebracht werden, dadurch gekennzeichnet, daß man als Polyisocyanatkomponenete a)

a1) Abmischungen von

(i) 1-Isocyanato-3,3,5-trimethyl-5-isocyanatomethyl-cyclohexan (IPDI)

mit

(ii) Isocyanuratgruppen aufweisenden Polyisocyanaten mit einem NCO-Gehalt von 15 bis 25 Gew.-% und einem Gehalt an freiem 1,6-Diisocyanatohexan (HDI) von max. 0,5 Gew.-%, hergestellt durch Trimerisierung eines Teils der Isocyanatgruppen von 1,6-Diisocyanatohexan

im Gewichtsverhältnis (i):(ii) 0,1:1 bis 2,5:1

oder

a2) Abmischungen von

(i) IPDI

mit

(iii) Isocyanuratgruppen aufweisenden Polyisocyanaten mit einem NCO-Gehalt von 14 bis 24 Gew.-%

und einem Gehalt an freiem 1,6-Diisocyanatohexan und freiem IPDI von insgesamt max. 0,5 Gew.-%, hergestellt durch Trimerisierung eines Teils der Isocyanatgruppen eines Gemischs aus HDI und IPDI, in welchem das IPDI in einem Gewichtsverhältnis von IPDI:HDI von bis zu 4:1 entsprechenden Mengen vorliegt,

wobei die Menge der Komponente (i) so bemessen wird, daß in der Abmischung a2) unter Einbeziehung des gegebenenfalls in der Komponente (iii) noch frei vorliegenden IPDI's 10 bis 70 Gew.-% freies IPDI vorliegen,
verwendet.

Bei der beim erfindungsgemäßen Verfahren einzusetzenden Polyisocyanatkomponente a) handelt es sich um Abmischungen a1) bzw. a2) der oben bereits genannten Art. Besonders bevorzugt wird als Polyisocyanatkomponente a) eine Abmischung a1) verwendet, die zu 10 bis 70, insbesondere zu 35 bis 65 Gew.-% aus IPDI besteht. Die Komponente (ii) weist vorzugsweise einen NCO-Gehalt von 18 bis 23 Gew.-% auf.

Die Herstellung der Einzelkomponente (ii) durch Teiltrimerisierung von 1,6-Diisocyanatohexan kann beispielsweise gemäß US-PS 4 324 879 bzw. gemäß EP-PS 10 589, die Herstellung der Teilkomponente (iii) durch Mischtrimerisierung von HDI und IPDI kann beispielsweise gemäß DE-OS 3 033 860 erfolgen. Die Polyisocyanatkomponente a2) besteht vorzugsweise zu 35 bis 65 Gew.-% aus freiem IPDI. Bei der Herstellung der Mischtrimerisate (iii) werden Gemische HDI und IPDI eingesetzt, die bis zu 4 Gew.-Teile IPDI pro Gewichtsteil HDI aufweisen. Vorzugsweise liegt das Gewichtsverhältnis HDI:IPDI bei 4:1 bis 1:4. Vorzugsweise weist die Komponente (iii) einen NCO-Gehalt von 17 bis 22 Gew.-% auf.

Bei der Komponente b) handelt es sich im allgemeinen um Gemische aus b1) höhermolekularen Polyetherpolyolen mit b2) niedermolekularen Kettenverlängerungsmitteln bzw. Vernetzern.

Bei der Komponente b1) handelt es sich um Polyetherpolyole des Molekulargewichtsbereichs 500 bis 10 000, vorzugsweise 2000 bis 8000 mit zwei oder drei endständigen Hydroxylgruppen bzw. um Gemische von Polyetherpolyolen der genannten Molekulargewichtsbereiche einer (mittleren) Hydroxylfunktionalität von 2 bis 3. Die Polyetherpolyole werden in an sich bekannter Weise durch Alkoxylierung von geeigneten Startermolekülen wie beispielsweise Glycerin, Trimethylolpropan, Wasser, Propylenglykol oder Ethylenglykol erhalten. Falls Gemische aus di-und trifunktionellen Polyetherpolyolen der genannten Hydroxylfunktionalität eingesetzt werden, kann die Herstellung der Gemische durch Alkoxylierung eines entsprechenden Startergemischs oder durch Abmischung von separat hergestellten Polyetherpolyolen erfolgen. Als Alkoxylierungsmittel dienen Propylenoxid und Ethylenoxid, welche gegebenenfalls auch im Gemisch zum Einsatz gelangen können. Die Polyetherketten der Polyetherpolyole bestehen jedoch vorzugsweise zumindest zu 50 Gew.-% aus Propylenoxideinheiten, jedoch mit der Maßgabe, daß bei der Alkoxylierungsreaktion am Ende reines Ethylenoxid in einer Menge von mindestens 5 Gew.-%, vorzugsweise von mindestens 10 Gew.-%, bezogen auf das Gesamtgewicht aller zum Einsatz gelangenden Alkylenoxide verwendet wird. Der Anteil der Komponente b1) an derartigen Ethylenoxid-getippten Polyetherpolyolen liegt vorzugsweise mindestens bei 80 Gew.-%, bezogen auf das Gesamtgewicht der Komponente b1). Vorzugsweise werden ausschließlich Ethylenoxid-getippte Polyetherpolyole mit dem genannten Gehalt an endständigen Ethylenoxideinheiten verwendet. Besonders bevorzugte Polyetherpolyole sind solche, die durch Propoxylierung der beispielhaft genannten Startermoleküle und anschließende Ethoxylierung des Propoxylierungsprodukts erhalten worden sind, wobei das Gewichtsverhältnis Propylenoxid:Ethylenoxid bei 50:50 bis 95:5, vorzugsweise bei 70:30 bis 90:10 liegt.

Das Molekulargewicht der Polyetherpolyole läßt sich aus der Hydroxylfunktionalität und dem Hydroxylgruppengehalt errechnen.

Bei der Komponente b2) handelt es sich um, im Sinne der Isocyanat-Additionsreaktion di- und/oder trifunktionelle Verbindungen eines unter 500 liegenden Molekulargewichts. Die Komponente b2) enthält vorzugsweise Di-und/oder Trialkanolamine mit vorzugsweise ausschließlich sekundären oder tertiären Aminogruppen wie beispielsweise Diethanolamin, Triethanolamin, N-Methyl-diethanolamin, oder, weniger bevorzugt, entsprechenden Verbindungen mit sekundären Hydroxylgruppen wie Dipropanolamin, Tripropanolamin oder N-Methyl-dipropanolamin. Ganz besonders bevorzugt wird Diethanolamin verwendet. Grundsätzlich können auch Gemische derartiger Di- und Trialkanolamine verwendet werden. Neben diesen Di- und/oder Trialkanolaminen können als Kettenverlängerungs- bzw. Vernetzungsmittel auch stickstofffreie, gegebenenfalls Etherbrücken aufweisende Alkandiole und/oder -triole verwendet werden. Gut geeignet als Komponente b2) sind demzufolge auch Gemische der beispielhaft genannten Di-und/oder Trialkanolamine mit derartigen stickstofffreien Polyolen. In derartigen, als Komponente b2) gut geeigneten Gemischen liegt der Anteil der stickstofffreien Polyole, bezogen auf das Gesamtgewicht der Komponente b2), im allgemeinen bei maximal 70 Gew.-%, Beispiele für derartige stickstofffreie Verbindungen sind Diole wie Ethylenglykol, Diethylenglykol, Triethylenglykol, Tetraethylenglykol, Propylenglykol, Dipropylenglykol, Tripropylenglykol, Tetrapropylenglykol, 1,2-, 1,4- oder 2,3-Dihydroxybutan, 1,6-Dihydroxyhexan, technische Octandiol-Isomerengemische oder beliebige Gemische derartiger Diole und darüber hinaus Triole wie Glycerin, Trimethylolpropan oder die Alkoxylierungs- vorzugsweise Propoxylierungsprodukte dieser Triole soweit ihr Molekulargewicht unterhalb 500 liegt. Grundsätzlich ist es auch möglich, allerdings weniger bevorzugt, als Komponente b2) ausschließlich stickstofffreie Polyole der beispielhaft genannten Art zu verwenden.

Die Komponente b2) wird in solchen Mengen eingesetzt, daß in dem Reaktionsgemisch pro 100 Gew.-Teilen der Komponente b1) 3 bis 50, vorzugsweise 5 bis 30 Gew.-Teile der Komponente b2) vorliegen.

Bei den Katalysatoren c) handelt es sich um organische Zinn- und/oder Bleiverbindungen, insbesondere um Dialkylzinn(IV)-Salze oder Blei(II)-Salze von Carbonsäure, wobei die mit dem Zinnatom verknüpften Alkylreste 1 bis 4 Kohlenstoffatome und die indifferenten Kohlenwasserstoffreste der vorzugsweise aliphatischen Carbonsäuren vorzugsweise 7 bis 11 Kohlenstoffatome aufweisen. Beispiele derartiger Blei- bzw. Zinnkatalysatoren sind Dimethylzinndilaurat, Dimethylzinndioctoat, Dibutylzinndilaurat, Dimethylzinndioctoat oder Blei(II)-octoat. Vorzugsweise werden die beispielhaft genannten Dimethylzinn-Verbindungen, insbesondere Dimethylzinndilaurat verwendet. Grundsäztlich ist es auch möglich, die aus der Polyurethanchemie bekannten, tert. Stickstoffatome aufweisenden Aminkatalysatoren bzw. Kombinationen der Aminkatalysatoren mit Metallkatalysatoren der beispielhaft genannten Art zu verwenden. Geeignete Aminkatalysatoren sind beispielsweise Triethylendiamin oder N,N-Dimethylbenzylamin.

Die Katalysatoren werden in einer Menge von 0,01 bis 5 Gew.-Teilen, vorzugsweise von 0,2 bis 2 Gew.-Teilen pro 100 Gew.-Teile der Komponente b1) verwendet.

Bei den gegebenenfalls mitzuverwendenden Hilfs- und Zusatzmitteln d) handelt es sich beispielsweise um

d1) Treibmittel wie Wasser und/oder leicht flüchtigen organischen Substanzen wie z.B. Aceton, Ethylacetat, halogensubstituierte Alkane wie Methylenchlorid, Chloroform, Ethylidenchlorid, Vinylidenchlorid, Monofluortrichlormethan, Chlorifluormethan oder Dichlordifluormethan. Eine Triebwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Weitere, gegebenenfalls mitzuverwendende Hilfs- und Zusatzmittel sind beispielsweise
d2) Lichtstabilisatoren. Hierzu gehören beispielsweise Piperidinderivate wie 4-Benzoyloxy-2,2,6,6-tetramethylpiperidin, 4-Benzoyloxy-1,2,2,6,6-pentamethylpiperidin, Bis-(2,2,6,6-tetramethyl-4-piperidyl)-sebacat, Bis-(2,2,6,6-tetramethyl-4-piperidyl)-suberat oder Bis-(2,2,6,6-tetramethyl-4-piperidyl)-dodecandioat; Benzophenonderivate wie 2,4-Dihydroxy-, 2-Hydroxy-4-methoxy-, 2-Hydroxy-4-octoxy-, 2-Hydroxy-4-dodecyloxy oder 2,2'-Dihydroxy-4-dodecyloxy-benzophenon; Benztriazolderivate wie 2-(2'-Hydroxy-3',5'-di-tert.-amylphenyl)-benztriazol; Oxalanilide wie 2-Ethyl-2'-ethoxy- oder 4-Methyl-4'-methoxyoxalanilid; Salicylsäurephenylester und Derivate wie Salicylsäurephenylester, Salicylsäure-4-tert.-butylphenylester und Salicylsäure-4-tert.-octylphenylester; Zimtsäureesterderivate wie $\alpha$-Cyano-$\beta$-methyl-4-methoxyzimtsäuremethylester, $\alpha$-Cyano-$\beta$-methyl-4-methoxyzimtsäurebutylester, $\alpha$-Cyano-$\beta$-phenylzimtsäureethylester und $\alpha$-Cyano-$\beta$-phenylzimtsäureisooctylester oder Malonesterderivate wie 4-Methoxy-benzylidenmalonsäuredimethylester, 4-Methoxybenzylidenmalonsäurediethylester, 4-Butoxy-benzylidenmalonsäuredimethylester.

Die vorgenannten Lichtstabilisatoren werden erfindungsgemäß einzeln oder in Kombinationen verwendet. Bevorzugt werden Mischungen von Piperidin- mit Benztriazolderivaten.

Weitere, gegebenenfalls mitzuverwendende Hilfs- und Zusatzstoffe sind
d3) oberflächenaktive Zusatzstoffe (Emulgatoren und Schaumstabilisatoren). Als Emulgatoren kommen z.B. die Natriumsalze von Ricinusölsulfonaten oder auch von Fettsäuren oder Salze von Fettsäuren mit Aminen wie ölsaures Diethylamin oder stearinsaures Diethanolamin, in Frage. Auch Alkali- oder Ammoniumsalze von Sulfonsäuren wie etwa von Dodecylbenzolsulfonsäuren oder auch von Fettsäuren, wie Ricinolsäure oder von polymeren Fettsäuren können als oberflächenaktive Zusatzstoffe mitverwendet werden, außerdem ethoxyliertes Nonylphenol.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von be sonderem Interesse sind vielfach über Allophanatgruppen verzweigte Polysiloxan-Polyoxyalkylen-Copolymere gemäß DE-Offenlegungsschrift 2 558 523.

Die vorgenannten Emulgatoren oder Stabilisatoren werden erfindungsgemäß bevorzugt einzeln, aber auch in beliebiger Kombination verwendet.

Weitere, gegebenenfalls mitzuverwendende Hilfs- und Zusatzmittel sind beispielsweise Zellregler der an sich bekannten Art wie Paraffine oder Fettalkohole, Pigmente oder Farbstoffe, Flammschutzmittel der an sich bekannten Art wie z.B. Trischlorethylphosphat oder Ammoniumphosphat und -polyphosphat oder Füllstoffe wie Bariumsulfat, Kieselgur, Ruß, Schlämmkreide oder auch verstärkend wirkende Glasfasern. Schließlich können beim erfindungsgemäßen Verfahren auch die an sich bekannten inneren Formtrennmittel mitverwendet werden.

Vor der Durchführung des erfindungsgemäßen Verfahrens werden vorzugsweise die Komponenten b1) und b2) zu einer "Polyolkomponente" b) vermischt, die dann mit der Polyisocyanatkomponente a) als "one-shot-System" verarbeitet wird. Vor der Durchmischung der "Polyolkomponente" mit der Polyisocyanatkomponente a) werden den genannten Reaktionspartnern die Katalysatoren c) und die gegebenenfalls mitverwendeten Hilfs- und Zusatzmittel d) einverleibt. So können beispielsweise die organischen Treibmittel und die Lichtstabilisatoren der Polyisocyanatkomponente a) und die Katalysatoren c) und die gegebenenfalls mitverwendeten sonstigen Hilfs- und Zusatzmittel d) der Polyolkomponente zugemischt werden. Die Herstellung des reaktionsfähigen Gemischs aus den genannten Komponenten erfolgt unter Einhaltung einer NCO-Kennzahl ( = NCO/H-aktiv-Äquivalentverhältnis x 100) von 70 bis 130, vorzugsweise 75 bis 110 unter Verwendung der üblichen Mischaggregate, wie sie beispielsweise aus der Reaktionsspritzgußtechnik bekannt sind. Das reaktionsfähige Gemisch wird unmittelbar nach seiner Herstellung in geschlossene Formen (beispielsweise Stahl-oder Aluminiumformen), deren Innenwände gegebenenfalls mit den üblichen äußeren Trennmitteln beschichtet worden sind, eingetragen. Die Menge des in die Form eingetragenen Reaktionsgemischs und auch die Menge des gegebenenfalls mitverwendeten Treibmittels hängt von der angestrebten Dichte des Formteils ab. Bei völligem Befüllen der Form entstehen massive Formteile, die insbesondere in Abhängigkeit der Art und Menge der gegebenenfalls mitverwendeten Füllstoffe eine Dichte von ca. 1,0 bis 1,4 g/cm$^3$ aufweisen. Falls die Form nur teilweise befüllt und gleichzeitig ein Treibmittel mitverwendet wird, entstehen beim erfindungsgemäßen Verfahren mikrozellulare (Dichtebereich etwa 0,8 bis 1,0 g/cm$^3$) bzw. geschäumte (Gesamtdichte ca. 0,1 bis 0,8, vorzugsweise 0,3 bis 0,7 g/cm$^3$) Formteile, wobei die Formteile auf jeden Fall eine kompakte Oberfläche bzw. nichtzellige Außenhaut aufweisen.

Die Temperatur des in die Form einzubringenden Gemischs liegt im allgemeinen bei 20 bis 60°C, vorzugsweise bei 20 bis 50°C. Die Temperatur der Formen wird bei der Durchführung des erfindungsgemäßen Verfahrens bei 40 bis 90, vorzugsweise 55 bis 65°C gehalten. Die Formkörper können im allgemeinen nach einer Formstandzeit von 3 bis 10 Minuten entformt werden. Die so erfindungsgemäß, erhaltenen elastischen Formteile weisen hervorragende mechanische Eigenschaften und eine ausgezeichnete Licht-und insbesondere UV-Stabislität auf. Sie eignen sich beispielsweise zur Herstellung von Polsterteilen wie Armlehnen, Sitzauflagen im Möbel- und Fahrzeugbau, elastischen Griffen für Werkzeuge und Bedienungselemente, elastischen Auflagen, Stoßecken von Möbeln und Stoßfängern oder Scheuerleisten von Fahrzeugen.

Die nachstehenden Beispiele dienen zur weiteren Erläuterung des erfindungsgemäßen Verfahrens. Alle Angaben in "Prozent" bzw. in "Teilen" beziehen sich auf das Gewicht.

Beispiele

In den nachfolgenden Beispielen werden folgende Abkürzungen verwendet:

Polyol I: Polyetherpolyol der OH-Zahl 27, hergestellt durch Propoxylierung von Trimethylolpropan und Ethoxylierung des Propylierungsproduktes (Gewichtsverhältnis PO:EO = 75:25).

Polyol II: Polyetherpolyol der OH-Zahl 28, hergestellt durch Propoxylierung von Propylenglykol und anschließende Ethoxylierung des Propylierungsproduktes (Gewichtsverhältnis PO:EO = 70:30).

Polyol III: Polyetherpolyol der OH-Zahl 35, hergestellt durch Propoxylierung von Trimethylolpropan und Ethoxylierung des Propoxylierungsproduktes (Gewichtverhältnis PO:EO = 82,5:17,5).

EG: Ethylenglykol

Stabilisator I: Handelsüblicher Polyetherpolysiloxan-Stabilisator ("Stabilisator DC 193" der DOW Corning).

Stabilisator II: Bis-(2,2,6,6-tetramethyl-4-piperidly-)sebacat.

Stabilisator III: 2-(2'-Hydroxy-3',5'-di-t-amyl-phenyl)benztriazol.

Polyisocyanat I: Isophorondiisocyanat; NCO = 38 %.

Polyisocyanat II: Trimerisiertes Hexamethylendiisocyanat.

Gehalt an monomerem HDI geringer als 0,5 %; NCO = 21,5 %.

Zur Durchführung der nachstehend tabellarisch zusammengefaßten Beispiele 1 bis 9 wurden die in der Tabelle angegebenen Ausgangsmaterialien zunächst zu den entsprechenden Polyol- bzw. Polyisocyanatkomponenten vereinigt, worauf diese mittels eines Laboratoriumsrührers unter Einhaltung der in der Tabelle angegebenen NCO-Kennzahlen miteinander vermischt wurden. Unmittelbar nach der Herstellung der Reaktionsgemische, die eine Temperatur von ca. 25°C aufwiesen, wurden diese in verschließbare Aluminiumformen der Abmessung 20 x 20 x 1 cm eingetragen, deren Temperatur bei ca. 60°C gehalten wurde, und deren Innenwände mit einem handelsüblichen Formtrennmittel (®Acmosil P 180 der Firma Acmos, Bremen) beschichtet wurden. Die Menge des in die Formen eingetragenen Reaktionsgemisches wurde jeweils so bemessen, daß Formkörper einer Dichte von 0,4 g/cm³ resultierten. Die Formkörper wurden nach einer Formstandzeit von 5 bis 10 Minuten entformt. Es resultierten jeweils lichtbeständige, geschäumte, elastische Formkörper, die eine geschlossene Oberflächenschicht aufweisen. Lediglich in Beispiel IX wurde kein Treibmittel zugesetzt; die hier eingesetzte Rezeptur eignet sich beispielsweise zur Herstellung von massiven Formteilen.

| Beispiel Nr. | | I | II | III | IV | V | VI | VII | VIII | IX |
|---|---|---|---|---|---|---|---|---|---|---|
| Polyol I | GT | 80 | 80 | 80 | 80 | 80 | 80 | - | - | 80 |
| Polyol II | GT | - | - | - | - | - | - | 80 | - | - |
| Polyol III | GT | - | - | - | - | - | - | - | 80 | - |
| EG | GT | 5 | 5 | 5 | 5 | 5 | - | 5 | 5 | 5 |
| Diethanolamin | GT | 5 | 5 | 5 | 5 | 5 | 10 | 5 | 5 | 5 |
| Dimethylzinndilaurat | GT | 1 | - | 1 | 1 | 1 | 1 | 1 | 1 | 1 |
| Bleioctoat | GT | - | 2,2 | - | - | - | - | - | - | - |
| $H_2O$ | GT | 0,3 | 0,3 | 0,3 | 0,3 | 0,3 | 0,3 | 0,3 | 0,3 | 0,3 |
| Stabilisator I | GT | 0,5 | 0,5 | 0,5 | 0,5 | 0,5 | 0,5 | 0,5 | 0,5 | 0,5 |
| Polyisocyanat I | GT | 24 | 24 | 19 | 28 | 13 | 22,5 | 28 | 29 | 28 |
| Polyisocyanat II | GT | 35 | 35 | 50 | 28 | 53,5 | 34 | 28 | 29 | 28 |
| Stabilisator II | GT | 0,5 | 0,5 | 0,5 | 0,5 | 0,5 | 0,5 | 0,5 | 0,5 | 0,5 |
| Stabilisator III | GT | 0,2 | 0,2 | 0,2 | 0,2 | 0,2 | 0,2 | 0,2 | 0,2 | 0,2 |
| R 11 | GT | 10 | 10 | 10 | 10 | 10 | 10 | 10 | 10 | - |
| NCO-Kennzahl | | 105 | 105 | 105 | 105 | 105 | 105 | 105 | 105 | 105 |
| Start-/Abbindezeit | | 27/43 | 17/25 | 29/47 | 27/48 | 29/48 | 10/42 | 20/46 | 11/24 | 20 |

GT = Gewichtsteile

## Patentansprüche

1. Verfahren zur Herstellung von lichtbeständigen, gegebenenfalls geschäumten, elastischen Polyurethan-Formteilen durch Umsetzung von

a) organischen Polyisocyanaten

mit

b) im Sinne der Isocyanat-Additionsreaktion mindestens difunktionellen organischen Verbindungen mit gegenüber Isocyanatgruppen reaktionsfähigen Wasserstoffatomen

in Gegenwart von

c) die Isocyanat-Additionsreaktion beschleunigenden Katalysatoren

und gegebenenfalls unter Mitverwendung von

d) weiteren, aus der Polyurethanchemie an sich bekannten Hilfs- und Zusatzstoffen,

wobei die Reaktionspartner unter Einhaltung einer Isocyanat-Kennzahl von 70 bis 130 in geschlossenen Formen zur Umsetzung gebracht werden, dadurch gekennzeichnet, daß man als Polyisocyanatkomponente a)

a1) Abmischungen von

(i) 1-Isocyanato-3,3,5-trimethyl-5-isocyanatomethyl-cyclohexan (IPDI)

mit

(ii) Isocyanuratgruppen aufweisenden Polyisocyanaten mit einem NCO-Gehalt von 15 bis 25 Gew.-% und einem Gehalt an freiem 1,6-Diisocyanatohexan von max. 0,5 Gew.-%, hergestellt durch Trimerisierung eines Teils der Isocyanatgruppen von 1,6-Diisocyanatohexan

im Gewichtsverhältnis (i):(ii) 0,1:1 bis 2,5:1

oder

a2) Abmischungen von

(i) IPDI

mit

(iii) Isocyanuratgruppen aufweisenden Polyisocyanaten mit einem NCO-Gehalt von 14 bis 24 Gew.-% und einem Gehalt an freiem 1,6-Diisocyanatohexan und freiem IPDI von insgesamt max. 0,5 Gew.-%, hergestellt durch Trimerisierung eines Teils der Isocyanatgruppen eines Gemischs aus HDI und IPDI, in welchem das IPDI in einem Gewichtsverhältnis von von IPDI:HDI von bis zu 4:1 entsprechenden Mengen vorliegt,

wobei die Menge der Komponente (i) so bemessen wird, daß in der Abmischung a2) unter Einbeziehung des gegebenenfalls in der Komponente (iii) noch frei vorliegenden IPDI's 10 bis 70 Gew.-% freies IPDI vorliegen,

verwendet.

2. Verfahren gemäß Anspruch 1, dadurch gekennzeichnet, daß man als Polyisocyanatkomponente a) eine Abmischung von IPDI mit Isocyanuratgruppen aufweisendem Polyisocyanat auf Basis von 1,6-Diisocyanatohexan mit einem Gehalt von 35 bis 65 Gew.-% IPDI, bezogen auf das Gesamtgewicht der Komponente a), verwendet.

3. Verfahren gemäß Anspruch 1 und 2, dadurch gekennzeichnet, daß man als Komponente b) Abmischungen von

b1) Polyetherpolyolen des Molekulargewichtsbereichs 500 bis 10.000 mit einer Hydroxylfunktionalität von 2 oder 3 oder Gemischen von Polyetherpolyolen des genannten Molekulargewichtsbereichs einer mittleren Hydroxylfunktionalität von 2 bis 3

mit

b2) als Kettenverlängerungs- bzw. Vernetzungsmittel wirkenden organischen Verbindungen eines unter 500 liegenden (mittleren) Molekulargewichts und einer (mittleren) Funktionalität im Sinne der Isocyanat-Additionsreaktion von 2 bis 3

verwendet.

4. Verfahren gemäß Anspruch 3, dadurch gekennzeichnet, man als Komponente b2) Di- oder Trialkanolamine, gegebenenfalls zusammen mit bis zu 70 Gew.-%, bezogen auf das Gesamtgewicht der Komponente b2), an di- und/oder trifunktionellen, gegebenenfalls Etherbrücken aufweisenden Alkandiolen und/oder - triolen eines unter 500 liegenden Molekulargewicht verwendet, wobei Di-und/oder Trialkanolamine der Komponente b2) in einer Menge von 3 bis 50 Gewichtsteilen pro 100 Gewichtsteilen der Komponente b1) zum Einsatz gelangen.

5. Verfahren gemäß Anspruch 1 bis 4, dadurch gekennzeichnet, daß man als Komponente c) organische Zinn- und/oder Bleiverbindungen verwendet.

6. Verfahren gemäß Anspruch 5, dadurch gekennzeichnet, daß man als Komponente c) Dimethylzinndilaurat oder Belioctoat verwendet.

**Claims**

1. A process for the production of light-stable, optionally foamed, elastic polyurethane mouldings by reaction of
   a) organic polyisocyanates with
   b) organic compounds containing isocyanate-reactive hydrogen atoms and having a functionality of at least two in the context of the isocyanate addition reaction in the presence of
   c) catalysts which accelerate the isocyanate addition reaction
   and optionally using
   d) other auxiliaries and additives known per se from polyurethane chemistry,
   the reactants being reacted in closed moulds at an isocyanate index maintained in the range from 70 to 130, characterized in that the polyisocyanate component a) is selected from
   a1) mixtures of
      (i) 1-isocyanato-3,3,5-trimethyl-5-isocyanatomethyl cyclohexane (IPDI) with
      (ii) isocyanurate polyisocyanates having an NCO content of 15 to 25% by weight and a free 1,6-diisocyanatohexane content of at most 0.5% by weight prepared by partial trimerization of the isocyanate groups of 1,6-diisocyanatohexane
   in a ratio by weight of (i) to (ii) of 0.1:1 to 2.5:1 or
   a2) mixtures of
      (i) IPDI
      with
      (ii) isocyanurate polyisocyanates having an NCO content of 14 to 24% by weight and a content of free 1,6-diisocyanatohexane and free IPDI of, in all, at most 0.5% by weight prepared by partial trimerization of the isocyanate groups of a mixture of HDI and IPDI in which the IPDI is present in quantities corresponding to a ratio by weight of IPDI to HDI of up to 4:1,
   the quantity of component (i) being gauged in such a way that 10 to 70% by weight free IPDI is optionally present in mixture a2), including any free IPDI still present in component (iii).

2. A process as claimed in claim 1, characterized in that the polyisocyanate component a) is a mixture of IPDI and isocyanurate polyisocyanate based on 1,6-diisocyanatohexane containing 35 to 65% by weight IPDI, based on the total weight of component a).

3. A process as claimed in claims 1 and 2, characterized in that component b) is selected from mixtures of

b1) polyether polyols having a molecular weight in the range from 500 to 10,000 and a hydroxyl functionality of 2 or 3 or mixtures of polyether polyols having a molecular weight in the same range and an average hydroxyl functionality of 2 to 3

with

b2) organic compounds having an (average) molecular weight below 500 and an (average) functionality in the context of the isocyanate addition reaction of 2 to 3 which act as chain-extending or crosslinking agents.

4. A process as claimed in claim 3, characterized in that di- or trialkanolamines, optionally together with up to 70% by weight, based on the total weight of component b2), of difunctional and/or trifunctional alkanediols and/or triols optionally containing ether bridges and having a molecular weight below 500, are used as component b2), di- and/or trialkanolamines of component b2) being used in a quantity of 3 to 50 parts by weight per 100 parts by weight of component b1).

5. A process as claimed in claims 1 to 4, characterized in that organic tin and/or lead compounds are used as component c).

6. A process as claimed in claim 5, characterized in that dimethyl tin dilaurate or lead octoate is used as component c).

**Revendications**

1. Procédé de production de pièces moulées en polyuréthanne élastique, éventuellement transformé en mousse, stable à la lumière, par réaction

a) de polyisocyanates organiques

avec

b) des composés organiques au moins difonctionnels dans le sens de la réaction d'addition d'isocyanate, porteurs d'atomes d'hydrogène aptes à réagir vis-à-vis de groupes isocyanato en présence

c) de catalyseurs accélérant la réaction d'addition d'isocyanate

et le cas échéant avec l'utilisation simultanée

d) d'autres adjuvants et additifs connus dans la chimie des polyuréthannes,

les partenaires réactionnels étant amenés à réagir en moules fermés avec maintien d'un indice d'isocyanate de 70 à 130,

caractérisé en ce qu'on utilise comme composant polyisocyanate

a)

a1) des mélanges

(i) de 1-isocyanato-3,3,5-triméthyl-5-isocyanatométhylcyclohexane (IPDI)

avec

(ii) des polyisocyanates porteurs de groupes isocyanurate ayant une teneur en NCO de 15 à 25 % en poids et une teneur en 1,6-diisocyanatohexane libre d'un maximum de 0,5 % en poids, préparés par trimérisation d'une partie des groupes isocyanato du 1,6-diisocyanatohexane

dans le rapport en poids (i):(ii) de 0,1:1 à 2,5:1 ou bien

a2) des mélanges

(i) de IPDI avec

(iii) des polyisocyanates porteurs de groupes isocyanurate ayant une teneur en NCO de 14 à 24 % en poids et une teneur en 1,6-diisocyanatohexane et en IPDI libres totalisant au maximum 0,5 % en poids, préparés par trimérisation d'une partie des groupes isocyanato d'un mélange de HDI et de IPDI dans lequel le IPDI est présent en quantités correspondant à un rapport en poids IPDI:HDI allant jusqu'à 4:1,

la quantité de composant (i) étant calculée de manière qu'il y ait dans le mélange a2), compte tenu du IPDI éventuellement encore présent à l'état libre dans le composant (iii), 10 à 70 % en poids de IPDI libre.

2. Procédé suivant la revendication 1, caractérisé en ce qu'on utilise comme composant polyisocyanate a) un mélange de IPDI avec un polyisocyanate porteur de groupes isocyanurate, à base de 1,6-diisocyanatohexane avec une teneur en IPDI de 35 à 65 % en poids, par rapport au poids total de composant a).

3. Procédé suivant les revendications 1 et 2, caractérisé en ce qu'on utilise comme composant b) des mélanges

    b1) de polyétherpolyols de poids moléculaire compris dans la plage de 500 à 10 000 avec une fonctionnalité hydroxyle de 2 ou 3 ou des mélanges de polyétherpolyols de la plage de poids moléculaire mentionnée avec une fonctionnalité hydroxyle moyenne de 2 à 3
    avec
    b2) des composés organiques agissant comme agents d'allongement de chaîne ou agents de réticulation, de poids moléculaire (moyen) inférieur à 500 et de fonctionnalité (moyenne) de 2 à 3 dans le sens de la réaction d'addition d'isocyanate.

4. Procédé suivant la revendication 3, caractérisé en ce qu'on utilise comme composant b2) des di- ou des trialcanolamines, le cas échéant conjointement avec jusqu'à 70 % en poids, par rapport au poids total de composant b2), d'alcanediols et/ou d'alcanetriols difonctionnels et/ou trifonctionnels, présentant éventuellement des ponts éther, de poids moléculaire inférieur à 500, avec utilisation de di- et/ou de trialcanolamines du composant b2) en une quantité de 3 à 50 parties en poids pour 100 parties en poids de composant b1).

5. Procédé suivant les revendications 1 à 4, caractérisé en ce qu'on utilise comme composant c) des composés organiques d'étain et/ou de plomb.

6. Procédé suivant la revendication 5, caractérisé en ce qu'on utilise comme composant c) le dilaurate de diméthylétain ou l'octoate de plomb.